# EUROPÄISCHE PATENTANMELDUNG

(11) **EP 4 455 960 A1**
(43) Veröffentlichungstag der Anmeldung: **30.10.2024**
(21) Anmeldenummer: 23169498.5
(22) Anmeldetag: 24.04.2023
(51) Int. Cl.: G06Q 10/08, G06Q 50/28

(54) **WARENLOGISTIKSYSTEM UND VERFAHREN ZUM BETREIBEN EINES WARENLOGISTIKSYSTEMS**

(71) Anmelder: Jungheinrich Aktiengesellschaft, 22047 Hamburg (DE)
(72) Erfinder: HARING, Stefan, 8510 Stainz (AT); LUTTENBERGER, Jürgen, 8435 Wagna (AT); MISCHITZ, Christian, 8045 Graz (AT)
(74) Vertreter: Seemann & Partner Patentanwälte mbB

(57) **Zusammenfassung**

Die Erfindung betrifft ein Warenlogistiksystem (30) und ein Verfahren zum Betreiben desselben. Das Warenlogistiksystem (30) umfasst einen Leitrechner (20), zumindest ein zum Betrieb in einem Transportbereich (8) eingerichtetes fahrerloses Flurförderzeug (22) und zumindest eine Eingabeeinheit (24). Die Eingabeeinheit (24) ist dazu eingerichtet, ein Triggersignal zu erzeugen und an den Leitrechner (20) zu übertragen. Der Leitrechner (20) ist dazu eingerichtet, a) aus dem Triggersignal unter Anwendung einer hinterlegten Transportauftragsdefinition einen in dem Transportbereich (8) von dem fahrerlosen Flurförderzeug (22) durchzuführenden Transportauftrag zu erzeugen, zu ändern oder zu löschen und ein mit diesem Transportauftrag verknüpftes Transportauftragssignal an das Flurförderzeug (22) zu übertragen, wobei das Transportauftragssignal das Flurförderzeug (22) dazu veranlasst, den Transportauftrag auszuführen, und/oder b) aus dem Triggersignal unter Anwendung einer hinterlegten Statusänderungsdefinition einen Status zumindest einer der Eingabeeinheit (24) zugeordneten Ladehilfsmittelstation (18) zu ändern, diese insbesondere zu aktivieren oder zu deaktivieren, wobei die in dem Leitrechner (20) hinterlegte Transportauftragsdefinition und/oder die in dem Leitrechner (20) hinterlegte Statusänderungsdefinition veränderbar sind/ist.

## Beschreibung

Die Erfindung betrifft ein Warenlogistiksystem, umfassend einen Leitrechner, zumindest ein zum Betrieb in einem Transportbereich eingerichtetes fahrerloses Flurförderzeug, und zumindest eine Eingabeeinheit, wobei die Eingabeeinheit dazu eingerichtet ist, ein Triggersignal zu erzeugen und an den Leitrechner zu übertragen. Ferner betrifft die Erfindung ein Verfahren zum Betreiben eines Warenlogistiksystems.

Ein Warenlogistiksystem ist ein Intralogistiksystem, welches der Handhabung von Material und Waren innerhalb eines räumlich begrenzen Bereichs dient, beispielsweise eines Betriebsgeländes oder eines Werks. Ein Warenlogistiksystem dient nicht dem Warentransport außerhalb dieses abgeschlossenen Bereichs, der typischerweise von einer Spedition abgewickelt wird, und wird daher auch als intralogistisches System bezeichnet.

In Warenlogistiksystemen werden vielfach fahrerlose Flurförderzeuge als Transportsystem eingesetzt. Fahrerlose Flurförderzeuge, die je nach Autonomiegrad auch als AGV (Automated Guided Vehicle) oder AMR (Autonomous Mobile Robot) bezeichnet werden, bewegen sich innerhalb eines Transportbereichs einer Warenlogistikeinrichtung und erledigen Transportaufträge. Zu diesem Zweck werden die fahrerlosen Flurförderzeuge von einem Leitrechner gesteuert, welcher neben der Koordination der Transportaufträge auch die Verkehrssteuerung der fahrerlosen Flurförderzeuge übernehmen kann.

Ein Transportauftrag besteht typischerweise aus der Aufgabe, ein Ladehilfsmittel, beispielsweise einer Palette oder dergleichen, auf dem beispielsweise eine Ware angeordnet ist, an einer Ladehilfsmittelstation aufzunehmen oder abzuholen und zu einer weiteren Ladehilfsmittelstation zu bringen bzw. an dieser abzuliefern. Das Ladehilfsmittel kann beladen oder leer sein. Um einen solchen Transport auszulösen, sind verschiedene Ansätze bekannt.

In der EP 3 268 827 B1 ist ein dezentrales System gezeigt, bei dem, ohne dass eine zentrale Steuerung der fahrerlosen Flurförderzeuge vorgesehen ist, Transportaufträge gestartet werden. Ein von dem fahrerlosen Flurförderzeug durchzuführender Transportauftrag wird, beispielsweise durch Betätigung eines Handbediengeräts, gestartet. Es ist ebenfalls vorgesehen, dass an einer Warenstation ein Belegungssensor vorhanden ist, welcher die Gegenwart eines entsprechenden Gegenstandes, beispielsweise einer Ware oder eines entsprechenden Ladehilfsmittels detektiert und den Transportauftrag startet. Das bekannte System ist ein Inselsystem, welches in vergleichsweise kleinen Warenlogistikeinrichtungen zur Anwendung kommt.

Es ist eine Aufgabe der Erfindung, ein Warenlogistiksystem sowie ein Verfahren zum Betreiben eines Warenlogistiksystems anzugeben, wobei das Warenlogistiksystem und das Verfahren flexibel an sich verändernde Anforderungen an eine Logistikeinrichtung, in der ein solches Warenlogistiksystem implementiert ist bzw. in der ein solches Verfahren durchgeführt wird, anpassbar sein soll, insbesondere im Hinblick auf Veränderungen der Warenlogistikeinrichtung.

Die Aufgabe wird gelöst durch ein Warenlogistiksystem, umfassend einen Leitrechner, zumindest ein zum Betrieb in einem Transportbereich eingerichtetes fahrerloses Flurförderzeug und zumindest eine Eingabeeinheit, wobei die Eingabeeinheit dazu eingerichtet ist, ein Triggersignal zu erzeugen und an den Leitrechner zu übertragen, wobei der Leitrechner dazu eingerichtet ist,
a) aus dem Triggersignal unter Anwendung einer hinterlegten Transportauftragsdefinition einen in dem Transportbereich von dem fahrerlosen Flurförderzeug durchzuführenden Transportauftrag zu erzeugen, zu ändern oder zu löschen und ein mit diesem Transportauftrag verknüpftes Transportauftragssignal an das Flurförderzeug zu übertragen, wobei das Transportauftragssignal das Flurförderzeug dazu veranlasst, den Transportauftrag auszuführen, und/oder
b) aus dem Triggersignal unter Anwendung einer hinterlegten Statusänderungsdefinition einen Status zumindest einer der Eingabeeinheit zugeordneten Ladehilfsmittelstation zu ändern, insbesondere die Ladehilfsmittelstation zu aktivieren oder zu deaktivieren, wobei
   die in dem Leitrechner hinterlegte Transportauftragsdefinition und/oder die in dem Leitrechner hinterlegte Statusänderungsdefinition veränderbar sind/ist.

Vorteilhaft können bei einem solchen System durch eine Veränderung der Transportauftragsdefinition die möglichen Verhaltensmuster des fahrerlosen Flurförderzeugs oder die Veränderung des Status der Ladehilfsmittelstation flexibel angepasst werden. Die Reaktion, welche das System auf ein entsprechendes Triggersignal, welches die Eingabeeinheit erzeugt, zeigt, ist also nicht fest vorgegeben, sie kann hingegen flexibel verändert werden. Das Verhalten des Warenlogistiksystems kann flexibel an Kundenwünsche angepasst werden und auch im laufenden Betrieb verändert werden. Dies ermöglicht eine bisher nicht dagewesene Flexibilität und Anpassungsfähigkeit des Warenlogistiksystems an unterschiedliche Spezifikationen und sich verändernde Anforderungen. Die Transportauftragsdefinition und die Statusänderungsdefinition sind beispielsweise in einer Datei abgelegt, die in einem nicht flüchtigen Datenspeicher des Leitrechners gespeichert ist. Die Definitionen sind in einem anpassbaren Parameterraum festgelegt, aus dem heraus das Verhalten des Systems flexibel angepasst werden kann. Für jede Eingabeeinheit und jedes erzeugte Triggersignal kann ein bestimmtes Verhalten des Systems definiert werden. Anders als bei herkömmlichen Systemen kann diese Definition, also beispielsweise der konkret in Reaktion auf ein bestimmtes Triggersignal einer bestimmten Eingabeeinheit erzeugte Transportauftrag, an dem Leitrechner oder an einer Konfigurationseinheit flexibel festgelegt werden.

Die Eingabeeinheit ist dazu eingerichtet, ein Triggersignal zu erzeugen. Dieses wird an den Leitrechner übertragen, indem der Leitrechner den entsprechenden Zustand der Eingabeeinheit insbesondere zyklisch abfragt.

Gemäß einer Ausführungsform ist das Warenlogistiksystem dadurch fortgebildet, dass dieses eine Konfigurationseinheit umfasst, wobei der Leitrechner dazu eingerichtet ist, der Konfigurationseinheit Zugriff auf die Transportauftragsdefinition und/oder die Statusänderungsdefinition zu gestatten.

Das Warenlogistiksystem ist beispielsweise in einer Warenlogistikeinrichtung implementiert. Die Konfigurationseinheit kann innerhalb der Warenlogistikeinrichtung angeordnet oder ein Teil von dieser sein. Alternativ kann es sich um eine externe Einheit handeln, welche außerhalb der Warenlogistikeinrichtung angeordnet ist. Die Konfigurationseinheit ist beispielsweise ein Computer. Mit Hilfe der Konfigurationseinheit kann die Transportauftragsdefinition und/oder die Statusänderungsdefinition verändert und angepasst werden. Dies kann auch durch einen Dritten, wie beispielsweise einen Servicedienstleister oder Hersteller der Warenlogistikeinrichtung, erfolgen. Das Warenlogistiksystem kann auf diese Weise unter Inanspruchnahme externer Dienstleistungen angepasst oder optimiert werden. Die Transportauftragsdefinition und/oder die Statusänderungsdefinition können/kann am Leitrechner selbst oder an der Konfigurationseinheit verändert werden.

Die Eingabeeinheit kann einer oder mehreren der Ladehilfsmittelstationen, insbesondere fest, zugeordnet werden. Diese Zuordnung ist funktionell und insbesondere durch den Transportauftrag definiert. Eine räumliche Zuordnung zwischen der Eingabeeinheit und der Ladehilfsmittelstationen kann vorgesehen sein, ist aber keinesfalls zwingend erforderlich. Die Eingabeeinheit kann einer einzigen, bestimmten Ladehilfsmittelstation zugeordnet sein. Erzeugt diese Eingabeeinheit ein Triggersignal, welches der Leitrechner abfragt, erzeugt der Leitrechner beispielsweise einen Transportauftrag, der diese Ladehilfsmittelstation als Startpunkt umfasst. Dabei kann die Erzeugung des Triggersignals auf eine manuelle Betätigung der Eingabeeinheit zurückgehen oder es kann sensorgesteuert ein Triggersignal erzeugt werden. Beispielsweise kann es sich bei der Eingabeeinheit um einen Belegungssensor handeln. Sobald dieser die Gegenwart eines Ladehilfsmittels in der Ladehilfsmittelstation erfasst wurde, wird ein entsprechendes Triggersignal erzeugt, so dass der Leitrechner einen Transportauftrag erzeugt, in der diese Ladehilfsmittelstation als Startpunkt festgelegt ist.

Wenn die Eingabeeinheit mehreren Ladehilfsmittelstationen funktionell zugeordnet wird, kann sie als Auslöser eines Transportes für eine Liste an sensorverwalteten Start-Ladehilfsmittelstationen dienen. Die Eingabeeinheit erzeugt, beispielsweise in Reaktion auf eine manuelle Betätigung, zunächst ein Triggersignal. Diese im Leitrechner hinterlegte Kombination aus Eingabeeinheit und Triggersignal bewirkt, dass für die in der Liste vorhandenen Ladehilfsmittelstationen eine Zustandsänderung, beispielsweise eine Belegung, abgefragt wird. Beispielsweise werden die an den Ladehilfsmittelstationen vorhandenen und als Eingabeeinheiten ausgebildeten Belegungssensoren, die anzeigen, ob die Ladehilfsmittelstation gefüllt oder leer sind, abgefragt. Anschließend kann entsprechend der im Leitrechner hinterlegten Konfiguration ein Transportauftrag für diejenige Ladehilfsmittelstation erzeugen werden, für die eine Belegung angezeigt wird.

Das Triggersignal wird vom Leitrechner, insbesondere zyklisch, abgefragt. Eine Zustandsänderung der Ladehilfsmittelstation oder ein manuell ausgelöster Befehl wird durch die Eingabeeinheit mittels des Triggersignals an den Leitrechner übermittelt. Dieser erzeugt, ändert oder löscht dann bevorzugt einen Transportauftrag, der von oder zu der Ladehilfsmittelstation erfolgt, wobei sich das diesbezügliche Verhalten des Warenlogistiksystems aus der Transportauftragsdefinition im Leitrechner ergibt.

Gemäß einer weiteren vorteilhaften Ausführungsform ist vorgesehen, dass es sich bei der Eingabeeinheit um einen manuell zu betätigenden Taster oder um einen Belegungssensor handelt, welcher dazu eingerichtet ist, in Reaktion auf eine manuelle Betätigung oder eine Detektion der Anwesenheit eines Ladehilfsmittels das Triggersignal zu erzeugen.

Bei der Eingabeeinheit handelt es sich beispielsweise um einen Drucktaster oder einen Leuchtdrucktaster. Eine Bedienperson kann einen solchen Taster betätigen, um einen Transportauftrag manuell beispielsweise zu erzeugen, zu ändern oder zu löschen. Der konkrete Transportauftrag, der in Reaktion auf das Triggersignal einer Eingabeeinheit erzeugt wird, die einer bestimmten Ladehilfsmittelstation zugeordnet ist, ist in der Transportauftragsdefinition hinterlegt und kann flexibel verändert werden. So kann, ohne dass eine abweichende Bedienung des Warenlogistiksystems erforderlich ist, dessen Verhalten auf sich verändernde Umstände angepasst werden. Bei dem Belegungssensor handelt es sich beispielsweise um einen kontaktlos arbeitenden Sensor, welcher die Anwesenheit eines Ladehilfsmittels an einer Station detektiert, beispielsweise mit einer Lichtschranke. Der Belegungssensor kann ebenso nicht kontaktlos arbeiten und entsprechend ausgestaltet sein, beispielsweise als Gewichtssensor oder als Berührungs- oder Kontaktsensor. Auch auf der Grundlage der Daten solcher Sensoren kann ein Triggersignal erzeugt und an den Leitrechner übertragen werden. Dieser erzeugt beispielsweise einen Transportauftrag, gemäß dem ein Ladehilfsmittel an der Ladehilfsmittelstation abgeholt wird. Wird ein Ladehilfsmittel an einer anderen Station detektiert, beispielsweise anhand des Gewichts, wird ein davon verschiedener Transportauftrag erzeugt. Wiederum wird der konkrete Transportauftrag auf der Grundlage der Transportauftragsdefinition erzeugt, wobei diese flexibel an die jeweiligen Bedürfnisse angepasst werden kann.

Eine Eingabeeinheit, beispielsweise ein Taster, kann auch dazu vorgesehen und eingerichtet sein, ein Triggersignal zu erzeugen, welches eine Statusänderung der mit der Eingabeeinheit verknüpften Ladehilfsmittelstation, entsprechend der Statusänderungsdefinition zu veranlassen. Beispielsweise kann durch Betätigung der entsprechenden Eingabeeinheit die zugehörige Ladehilfsmittelstation aktiviert oder deaktiviert werden. Aktive Ladehilfsmittelstationen können im System angefahren werden. Deaktivierte Ladehilfsmittelstationen können nicht angefahren werden, beispielsweise weil an diesen kein Bedienpersonal verfügbar ist. Eine Deaktivierung der Ladehilfsmittelstation bedeutet, dass diese in dem Warenlogistiksystem nicht mehr angefahren werden kann, da sie beispielsweise im System als solche nicht mehr vorhanden ist. Dies kann beispielsweise bedeuten, dass die Eingabeeinheit die Belegung einer Ladehilfsmittelstation mit einem Ladehilfsmittel, beispielsweise mit einer Palette, erkennt und daraufhin ein Triggersignal auslöst, welches durch den Leitrechner abgefragt und in ein Transportauftragssignal umgesetzt wird. Solange die Belegung der Ladehilfsmittelstation durch Abtransport des Ladehilfsmittels mittels eines Flurförderzeugs nicht aufgehoben ist, kann die Ladehilfsmittelstation nicht mit einem weiteren Ladehilfsmittel belegt werden und ist daher beispielsweise für die Anlieferung von Paletten deaktiviert, jedoch für den Abtransport freigegeben.

Gemäß einer weiteren Ausführungsform ist das Warenlogistiksystem dadurch fortgebildet, dass zumindest eine erste Ladehilfsmittelstation und eine zweite Ladehilfsmittelstation, die durch einen Transportweg miteinander verbunden sind, in dem Transportbereich vorhanden sind, wobei der Transportauftrag darin besteht, Ladehilfsmittel von der ersten Ladehilfsmittelstation zu der zweiten Ladehilfsmittelstation zu befördern.

Ein solcher Transportauftrag stellt den einfachsten aber auch am häufigsten verwirklichten Typ eines Transportauftrags dar.

Gemäß einer weiteren vorteilhaften Ausführungsform ist das Warenlogistiksystem dadurch fortgebildet, dass der Leitrechner dazu eingerichtet ist, eine Ablaufsteuerung der Transportaufträge und/oder eine Verkehrssteuerung der fahrerlosen Flurförderzeuge in dem Transportbereich bereitzustellen und den Transportauftrag, welcher zur Übertragung an das Flurförderzeug vorgesehen ist, unter Berücksichtigung der Parameter der Ablaufsteuerung und/oder der Verkehrssteuerung zu erzeugen. Beispielsweise kann dasjenige verfügbare bzw. freie Flurförderzeug den Transportauftrag erhalten, welches sich räumlich am nächsten an der Ladehilfsmittelstation befindet.

Bei der Abarbeitung der durch manuelle oder automatische Betätigung der Eingabeeinheit (mittels des Triggersignals) erzeugten Transportaufträge kann die allgemeine Ablaufsteuerung des Warenlogistiksystems berücksichtigt werden, so dass die erzeugten Transportaufträge bestmöglich in den laufenden Betrieb integriert werden können.

Gemäß einer weiteren vorteilhaften Ausführungsform ist das Warenlogistiksystem dadurch fortgebildet, dass dieses in einer Warenlogistikeinrichtung implementiert ist, wobei die Warenlogistikeinrichtung, auf der Grundlage eines Planungsmodells und unter Verwendung von in einer Logistikeinrichtung-Projekt-Datei gespeicherten Daten realisiert ist, und wobei die Logistikeinrichtung-Projekt-Datei Daten umfasst, die Eigenschaften zumindest einer der folgenden Komponenten der Warenlogistikeinrichtung beschreiben: konstruktive Eigenschaften eines Bauwerks der Warenlogistikeinrichtung, geometrische und/oder funktionelle Eigenschaften des Transportbereichs und/oder des Transportwegs, geometrische und/oder funktionelle Eigenschaften von Logistik-Infrastrukturelementen, insbesondere der ersten und zweiten Ladehilfsmittelstation, geometrische und/oder funktionelle Eigenschaften des fahrerlosen Flurförderzeugs, wobei in der Logistikeinrichtung-Projekt-Datei ferner Parameter der Transportauftragsdefinition hinterlegt sind.

Gemäß einer weiteren Ausführungsform ist das Warenlogistiksystem dadurch fortgebildet, dass die veränderbare Transportauftragsdefinition in einem kausal verknüpfen Parameterraum definiert und an dem Leitrechner oder der Konfigurationseinheit veränderbar ist. Der Parameterraum umfasst als Parameter:
a) in dem Warenlogistiksystem vorhandene Eingabeeinheiten, insbesondere alle vorhandenen Eingabeeinheiten,
b) für jede umfasste Eingabeeinheit, einen oder mehrere mögliche Typen der von dieser erzeugbaren Triggersignale, und
c) für jedes Triggersignal jeder Eingabeeinheit, eine oder mehrere Statusänderungsänderungsanforderung(en) eines Transportauftrags, insbesondere diesen zu erzeugen, zu ändern oder zu löschen.

Wie oben angegeben, umfasst der Parameterraum die in dem Warenlogistiksystem vorhandenen Eingabeeinheiten, also beispielsweise Taster, Leuchttaster oder Belegungssensoren. In dem entsprechenden Parameter kann außerdem festgelegt sein, welcher Ladehilfsmittelstation die entsprechenden Eingabeeinheiten zugeordnet sind. Es kann eine Eingabeeinheit oder es können mehrere Eingabeeinheiten pro Ladehilfsmittelstation vorgesehen sein.

Ferner ist für jede einzelne Eingabeeinheit festgelegt, welche Triggersignale die entsprechenden Eingabeeinheiten erzeugen können. Die verschiedenen Triggersignale sollen als verschiedene Typen von Triggersignalen bezeichnet werden. Ein Typ des Triggersignals ist beispielsweise das Drücken eines Tasters für in etwa 1 Sekunde. Ein weiterer Typ des Triggersignals wäre beispielsweise das Drücken des Tasters für ca. 3 Sekunden. Ein weiterer Typ des Triggersignals wäre das Signal eines Belegungssensors, welches angibt, dass sich ein Ladehilfsmittel in der Ladehilfsmittelstation befindet. In einem solchen Fall kann wiederum unterschieden werden, und zwar zwischen einem Triggersignal, welches die Belegung der Ladehilfsmittelstation anzeigt, und einem Triggersignal, welches anzeigt, dass die Ladehilfsmittelstation nicht belegt ist.

Für jedes der Triggersignale einer jeden Eingabeeinheit ist eine Statusänderungsanforderung eines Transportauftrags konfigurierbar, insbesondere diesen Transportauftrag zu erzeugen, zu ändern oder zu löschen.

Beispielsweise kann für eine bestimmte Eingabeeinheit vorgesehen sein, dass für ein Triggersignal, welches das Drücken des Drucktasters für ca. 3 Sekunden anzeigt, der letzte von der Ladehilfsmittelstation, der diese Eingabeeinheit zugeordnet ist, ausgehende Transportauftrag gelöscht wird. Ein weiteres Beispiel wäre eine Eingabeeinheit, die als Belegungssensor ausgestaltet ist. Ist an der zugehörigen Ladehilfsmittelstation ein Ladehilfsmittel vorhanden, und diese Eingabeeinheit detektiert das Ladehilfsmittel, wird automatisch ein Transportauftrag ausgelöst, welcher das Ladehilfsmittel von der betreffenden Ladehilfsmittelstation zu einer gewünschten und im Leitrechner konfigurierten Zielstation bringt.

Dieses Beispiel führt direkt zur nächsten Ausführungsform, gemäß der insbesondere vorgesehen ist, dass der Parameterraum als Parameter ferner umfasst:
für jeden Transportauftrag, sofern die Statusänderungsanforderung angibt, diesen zu erzeugen oder zu ändern,
d) eine Start-Ladehilfsmittelstation oder eine Gruppe von Start-Ladehilfsmittelstationen, und
e) eine Ziel-Ladehilfsmittelstation oder eine Gruppe von Ziel-Ladehilfsmittelstationen. Diese zusätzlichen Parameter gelten für jeden Transportauftrag, sofern dieser erzeugt oder geändert wird.

Alternativ zu einer im Leitrechner konfigurierbaren Start-Ladehilfsmittelstation und einer zu dem Transportauftrag im Leitrechner konfigurierbaren Ziel-Ladehilfsmittelstation können Gruppen von Start-Ladehilfsmittelstation und Ziel-Ladehilfsmittelstation definiert werden. Diese Gruppen können mit zusätzlichen Informationen kombiniert werden.

Anknüpfend an das zuvor genannte Beispiel wird z.B. bei Detektion eines Ladehilfsmittels an der Ladehilfsmittelstation ein Transportauftrag erzeugt, welcher als Ziel-Ladehilfsmittelstation nicht eine einzige Ladehilfsmittelstation, sondern eine Gruppe von Ladehilfsmittelstation umfasst. Zeigen nun beispielsweise entsprechende Belegungssensoren an den Ziel-Ladehilfsmittelstationen an, dass eine Ladehilfsmittelstation der Gruppe von Ziel-Ladehilfsmittelstationen vollständig belegt ist, kann der Leitrechner den Transportauftrag automatisch ändern, und anstatt der vollständig belegten Ziel-Ladehilfsmittelstation den Transportauftrag zu einer weniger belegten Ziel-Ladehilfsmittelstation umleiten. Diese Ziel-Ladehilfsmittelstation wird aus der Gruppe von Ziel-Ladehilfsmittelstation ausgewählt. Es ist ebenso vorgesehen, dass der Transportauftrag nicht geändert wird, sondern direkt mit einer anderen freien Ziel-Ladehilfsmittelstation der möglichen Ziel-Ladehilfsmittelstationen erzeugt wird.

Auch dieses Beispiel führt zu einer weiteren Ausführungsform, gemäß der das Warenlogistiksystem dadurch fortgebildet, dass die Parameter d) und/oder e) zusätzlich kausal verknüpft sind/ist mit:
i) einem Sensorsignal eines Belegungssensors der Start-Ladehilfsmittelstation oder Sensorsignalen von Belegungssensoren der Gruppe von Start-Ladehilfsmittelstationen, welches/welche angibt/angeben, ob die Ladehilfsmittelstation(en) frei oder belegt ist/sind, und/oder
ii) einem Parameter einer Ablaufsteuerung der Transportaufträge und/oder einer Verkehrssteuerung der fahrerlosen Flurförderzeuge in dem Transportbereich, welcher angibt, ob die Ladehilfsmittelstation frei oder belegt ist, wobei der Transportauftrag nur erzeugt wird, wenn die Start-Ladehilfsmittelstation belegt und die Ziel-Ladehilfsmittelstation frei ist.

Ferner ist insbesondere vorgesehen, dass bei mehreren möglichen Ziel-Ladehilfsmittelstationen der Gruppe von Ziel-Ladehilfsmittelstationen die anzufahrende Ziel-Ladehilfsmittelstationen basierend auf weiteren Kriterien bestimmt wird, welche die Ablaufsteuerung und/oder die Verkehrssteuerung in dem Warenlogistiksystem berücksichtigen. Beispielsweise können hinterlegte Prioritäten der Ziel-Ladehilfsmittelstationen oder die räumliche Nähe zur Start-Ladehilfsmittelstation berücksichtigt werden.

Gemäß einer weiteren Ausführungsform ist vorgesehen, dass die Ziel-Ladehilfsmittelstation durch eine Benutzereingabe am Flurförderzeug festgelegt wird oder die Zielauswahl manuell auf einem Client (Applikation auf einem PC) getroffen wird, beispielsweise am Leitrechner.

Die Ablaufsteuerung oder Verkehrssteuerung kann dahingehend berücksichtigt werden, dass beispielsweise in einem Anwendungsfall, in dem ein Flurförderzeug für einen Transportauftrag benötigt wird, für diesen dasjenige Flurförderzeug herangezogen wird, welches sich räumlich am nächsten zu der Start-Ladehilfsmittelstation befindet.

In der Logistikeinrichtung-Projekt-Datei befinden sich die genannten Komponenten der Warenlogistikeinrichtung in digitaler Form abgelegt. Die Warenlogistikeinrichtung-Projekt-Datei erfüllt somit teilweise die Funktion eines digitalen Zwillings der Warenlogistikeinrichtung. Zumindest aber stellt die Warenlogistikeinrichtung-Projekt-Datei die für eine Veränderung, Erweiterung oder Wartung der Warenlogistikeinrichtung erforderlichen Informationen flexibel zur Verfügung, so dass entsprechende Änderungen an der Warenlogistikeinrichtung problemlos vorgenommen werden können. In dieses digitale Abbild der Warenlogistikeinrichtung wird auch die Transportauftragsdefinition sowie die Statusänderungsdefinition integriert. Somit kann die Funktionalität des Warenlogistiksystems in das in der Logistikeinrichtung-Projekt-Datei gespeicherte digitale Abbild integriert werden.

Die Aufgabe wird ferner gelöst durch ein Verfahren zum Betreiben eines Warenlogistiksystems, welches einen Leitrechner, zumindest ein zum Betrieb in einem Transportbereich eingerichtetes fahrerloses Flurförderzeug und zumindest eine Eingabeeinheit umfasst. Das Verfahren umfasst die folgenden Schritte:
Erzeugen eines Triggersignals an der Eingabeeinheit und übertragen des Triggersignals an den Leitrechner,
wobei der Leitrechner,
   a) aus dem Triggersignal unter Anwendung einer hinterlegten Transportauftragsdefinition einen in dem Transportbereich von dem fahrerlosen Flurförderzeug durchzuführenden Transportauftrag erzeugt, ändert oder löscht und ein mit diesem Transportauftrag verknüpftes Transportauftragssignal an das Flurförderzeug überträgt, wobei das Flurförderzeug den Transportauftrag in Reaktion auf das Transportauftragssignal ausführt, und/oder
   b) aus dem Triggersignal unter Anwendung einer hinterlegten Statusänderungsdefinition einen Status zumindest einer der Eingabeeinheit zugeordneten Ladehilfsmittelstation ändert, insbesondere die Ladehilfsmittelstation aktiviert oder deaktiviert, wobei
die in dem Leitrechner hinterlegte Transportauftragsdefinition und/oder die in dem Leitrechner hinterlegte Statusänderungsdefinition veränderbar sind/ist.

Auf das Verfahren zum Durchführen eines Transportauftrags treffen gleiche oder ähnliche Vorteile zu, wie sie bereits im Hinblick auf das Warenlogistiksystem selbst erwähnt wurden, so dass auf Wiederholungen verzichtet werden soll.

Vorteilhaft ist das Verfahren dadurch fortgebildet, dass das Warenlogistiksystem ferner eine Konfigurationseinheit umfasst, wobei der Leitrechner der Konfigurationseinheit Zugriff auf die Transportauftragsdefinition und/oder die Statusänderungsdefinition gestattet und die Konfigurationseinheit die Transportauftragsdefinition und/oder die Statusänderungsdefinition ändert..

Gemäß einer weiteren vorteilhaften Ausführungsform ist vorgesehen, dass die Eingabeeinheit ein manuell zu betätigender Taster oder ein Belegungssensor ist, wobei das Triggersignal in Reaktion auf eine manuelle Betätigung des Tasters oder in Reaktion auf eine Detektion der Anwesenheit eines Ladehilfsmittels erzeugt wird.

Das Verfahren ist ferner insbesondere dadurch fortgebildet, dass zumindest eine erste Ladehilfsmittelstation und eine zweite Ladehilfsmittelstation, die durch einen Transportweg miteinander verbunden sind, in dem Transportbereich vorhanden sind, wobei bei Ausführung des Transportauftrags, zumindest ein Ladehilfsmittel von der ersten Ladehilfsmittelstation zu der zweiten Ladehilfsmittelstation befördert wird.

Das Verfahren zeichnet sich gemäß einer weiteren Ausführungsform dadurch aus, dass der Leitrechner eine Ablaufsteuerung der Transportaufträge und/oder eine Verkehrssteuerung der fahrerlosen Flurförderzeuge in dem Transportbereich bereitstellt und den Transportauftrag unter Berücksichtigung der Parameter der Ablaufsteuerung und/oder der Verkehrssteuerung erzeugt.

Gemäß einer weiteren vorteilhaften Ausführungsform ist das Verfahren dadurch fortgebildet, dass das Warenlogistiksystem in einer Warenlogistikeinrichtung implementiert wird, wobei die Warenlogistikeinrichtung, auf der Grundlage eines Planungsmodells und unter Verwendung von in einer Logistikeinrichtung-Projekt-Datei gespeicherten Daten realisiert wird, und wobei die Logistikeinrichtung-Projekt-Datei Daten umfasst, die Eigenschaften zumindest einer der folgenden Komponenten der Warenlogistikeinrichtung beschreiben:
- konstruktive Eigenschaften eines Bauwerks der Warenlogistikeinrichtung,
- geometrische und/oder funktionelle Eigenschaften des Transportbereichs und/oder des Transportwegs,
- geometrische und/oder funktionelle Eigenschaften von Logistik-Infrastrukturelementen, insbesondere der ersten und zweiten Ladehilfsmittelstation,
- geometrische und/oder funktionelle Eigenschaften des fahrerlosen Flurförderzeugs,
wobei in der Logistikeinrichtung-Projekt-Datei ferner Parameter der Transportauftragsdefinition hinterlegt sind.

Gemäß einer weiteren vorteilhaften Ausführungsform ist das Verfahren dadurch fortgebildet, dass die veränderbare Transportauftragsdefinition in einem kausal verknüpfen Parameterraum definiert und von dem Leitrechner oder der Konfigurationseinheit veränderbar ist, und der Parameterraum als Parameter umfasst:
a) in dem Warenlogistiksystem vorhandene Eingabeeinheiten, insbesondere alle vorhandenen Eingabeeinheiten,
b) für jede umfasste Eingabeeinheit, einen oder mehrere mögliche Typen der von dieser erzeugbaren Triggersignale, und
c) für jedes Triggersignal jeder Eingabeeinheit, eine oder mehrere Statusänderungsänderungsanforderung(en) eines Transportauftrags, insbesondere diesen zu erzeugen, zu ändern oder zu löschen, für jeden Transportauftrag, sofern die Statusänderungsanforderung angibt, diesen zu erzeugen oder zu ändern:
d) eine Start-Ladehilfsmittelstation oder eine Gruppe von Start-Ladehilfsmittelstationen, und
e) eine Ziel-Ladehilfsmittelstation oder eine Gruppe von Ziel-Ladehilfsmittelstationen, wobei insbesondere die Parameter d) und/oder e) zusätzlich kausal verknüpft sind/ist mit:
   i) einem Sensorsignal eines Belegungssensors der Start-Ladehilfsmittelstation oder Sensorsignalen von Belegungssensoren der Gruppe von Start-Ladehilfsmittelstationen, welches/welche angibt/angeben, ob die Ladehilfsmittelstation(en) frei oder belegt ist/sind, und/oder
   ii) einem Parameter einer Ablaufsteuerung der Transportaufträge und/oder einer Verkehrssteuerung der fahrerlosen Flurförderzeuge in dem Transportbereich, welcher angibt, ob die Ladehilfsmittelstation frei oder belegt ist, wobei der Transportauftrag nur erzeugt wird, wenn die Start-Ladehilfsmittelstation belegt und die Ziel-Ladehilfsmittelstation frei ist.

Ferner ist insbesondere vorgesehen, dass bei mehreren möglichen Ziel-Ladehilfsmittelstationen der Gruppe von Ziel-Ladehilfsmittelstationen die anzufahrende Ziel-Ladehilfsmittelstationen basierend auf weiteren Kriterien bestimmt wird, die durch die Ablaufsteuerung und/oder die Verkehrssteuerung vorgegeben sind, beispielsweise nach hinterlegten Prioritäten der Ziel-Ladehilfsmittelstationen oder der räumlichen Nähe zur Start-Ladehilfsmittelstation.

Das beschriebene Warenlogistiksystem sowie das beschriebene Verfahren finden Anwendung im Bereich der fahrerlosen Transportsysteme (FTS). Fahrerlose Transportfahrzeuge (FTF) müssen in einem solchen FTS mit Transportaufträgen versorgt werden, um entsprechend Waren und Ladehilfsmittel in einer Warenlogistikeinrichtung transportieren zu können. Solche Transportaufträge betreffen beispielsweise das Abholen von Waren und/oder Ladehilfsmitteln von einer ersten Ladehilfsmittelstation und das Abliefern der Waren und Ladehilfsmitteln an einer zweiten Ladehilfsmittelstation. Um einen solchen Transport auszulösen, können beispielsweise manuelle Eingaben an einer Eingabeeinheit durch einen Benutzer erfolgen. Eine solche Eingabeeinheit ist beispielsweise ein Drucktaster, ein Leuchtdrucktaster oder auch eine digital dargestellte berührungssensitive Oberfläche. Ferner können automatische Systeme vorgesehen sein, um einen Transport auszulösen, also einen entsprechenden Transportauftrag zu erzeugen. Hierzu sind beispielsweise Belegungssensoren vorgesehen. Diese können zyklisch oder durch den Leitrechner getriggert, die Gegenwart von Waren oder Ladehilfsmitteln an einer Ladehilfsmittelstation überprüfen. Wird ein Ladehilfsmittel detektiert, kann ein entsprechender Transportauftrag erzeugt werden.

Das Warenlogistiksystem bzw. das Verfahren zum Betreiben des Warenlogistiksystems ermöglicht eine flexible und veränderbare Transportauftragsdefinition bzw. Statusänderungsdefinition. Diese definieren den Transportauftrag oder die Statusänderung der Ladehilfsmittelstation, die durch eine entsprechende Eingabe an der Eingabeeinheit ausgelöst werden. Das System unterstützt den Benutzer bei der Konfiguration einer Ablaufsteuerung, in dem ein kausal verknüpfter Parameterraum bereitgestellt wird, aus dem die Transportauftragsdefinition bzw. Statusänderungsdefinition für jede einzelne Eingabeeinheit des Warenlogistiksystems und für jedes einzelne von der entsprechenden Eingabeeinheit erzeugbaren Triggersignal definiert werden. So kann das Verhalten der Flurförderzeuge und Ladehilfsmittelstationen flexibel definiert bzw. konfiguriert werden. Eine solche Konfiguration kann gemeinsam mit weiteren Definitionen, beispielsweise der konstruktiven Eigenschaften eines Bauwerks der Warenlogistikeinrichtung, der geometrischen und/oder funktionellen Eigenschaften des Transportbereichs, der geometrischen und/oder funktionellen Eigenschaften von Logistik-Infrastrukturelementen und/oder geometrischen und/oder funktionellen Eigenschaften des fahrerlosen Flurförderzeugs in einer Warenlogistikeinrichtung-Projekt-Datei abgespeichert sein.

Bei der Inbetriebnahme der Warenlogistikeinrichtung können die entsprechenden Informationen der Logistikeinrichtung-Projekt-Datei auf den Leitrechner übertragen werden. Anschließend stellt sich das gewünschte Verhalten des Warenlogistiksystems ein, welches zuvor konfiguriert und definiert wurde. Diese Konfiguration kann vorteilhaft jederzeit verändert und angepasst werden, was einer Warenlogistikeinrichtung, die mit einem Warenlogistiksystem gemäß Aspekten der Erfindung ausgestattet ist, eine bisher nicht dagewesene Flexibilität verleiht.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Warenlogistikeinrichtung, in der ein Warenlogistiksystem implementiert ist, und
- Fig. 2: eine schematische Funktionsdarstellung eines Warenlogistiksystems.

In den Zeichnungen sind jeweils gleiche oder gleichartige Elemente und/oder Teile mit denselben Bezugsziffern versehen, so dass von einer erneuten Vorstellung jeweils abgesehen wird.

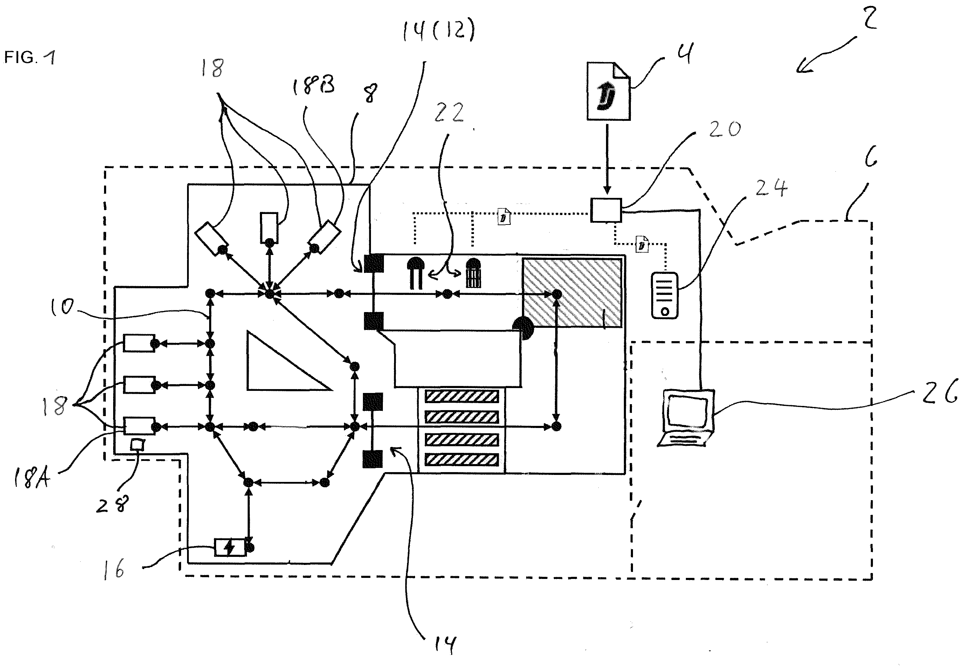

Die in Fig. 1 schematisch dargestellte Warenlogistikeinrichtung 2 umfasst ein Bauwerk 6, welches in Form eines Gebäudeumrisses in gestrichelter Linie dargestellt ist. In der Warenlogistikeinrichtung 2 befinden sich ein Transportbereich 8 und Transportwege 10. Der Transportbereich 8 ist mit einem entsprechend bezeichneten Polygonzug dargestellt. Zentral befindet sich eine weitere Grenze des Transportbereichs 8, wodurch eine Aussparung definiert ist. Die Transportwege 10 sind mit Pfeilen dargestellt. Die Warenlogistikeinrichtung 2 umfasst Logistikinfrastrukturelemente 12. Beispielhaft dargestellt sind Rolltore 14, eine Ladestation 16 sowie mehrere Ladehilfsmittelstationen 18. In der Warenlogistikeinrichtung 2 ist ein Warenlogistiksystem implementiert. Dieses umfasst einen Leitrechner 20, in dem eine veränderbare Transportauftragsdefinition und/oder eine veränderbare Statusänderungsdefinition hinterlegt sind/ist. Beispielsweise sind diese Informationen in einer Logistikeinrichtung-Projekt-Datei 4 gespeichert, die bei Inbetriebnahme der Warenlogistikeinrichtung 2 auf den Leitrechner 20 übertragen werden kann. In dem Transportbereich 8 werden fahrerlose Flurförderzeuge 22 betrieben. Für den Betrieb der fahrerlosen Flurförderzeuge 22 stellt der Leitrechner 20 eine entsprechende Verkehrssteuerung zur Verfügung. Ferner umfasst das Warenlogistiksystem eine Eingabeeinheit 24, die dazu eingerichtet ist, in Reaktion auf beispielsweise eine manuelle Betätigung einer ihrer Tasten ein Triggersignal zu erzeugen.

Die Definition, aus welchem Triggersignal welche Art von Transport erzeugt wird, ist in der Transportauftragsdefinition, welche in dem Leitrechner 20 hinterlegt ist, definiert. Die Transportauftragsdefinition ist beispielhaft in der Logistikeinrichtung-Projekt-Datei 4 gespeichert. Der Leitrechner 20 steht mit der Eingabeeinheit 24 in Daten technischer Verbindung. Das in der Eingabeeinheit 24 erzeugte Triggersignal wird an den Leitrechner 20 übertragen. Der Leitrechner 20 ist ferner dazu eingerichtet, einen innerhalb des Transportbereichs 8 von einem der fahrerlosen Flurförderzeuge 22 durchzuführenden Transportauftrag zu erzeugen. Dementsprechend wird dieser Transportauftrag, bzw. ein den Transportauftrag umfassendes oder charakterisierendes Transportauftragssignal an das Flurförderzeug 22 übertragen.

Der von dem Leitrechner 20 an das Flurförderzeug 22 übertragene Transportauftrag veranlasst das Flurförderzeug 22 dazu, den entsprechenden Transportauftrag auszuführen. Der Leitrechner 20 kann ausgehend von dem Triggersignal der Eingabeeinheit 24 den Transportauftrag erzeugen, den Transportauftrag verändern oder den Transportauftrag löschen. Der Leitrechner 20 kann ferner dazu eingerichtet sein, auf der Grundlage des Triggersignals einen Status einer mit der Eingabeeinheit 24 verknüpften Ladehilfsmittelstation 18 zu verändern. Beispielsweise kann die Ladehilfsmittelstation 18 aktiviert oder deaktiviert werden. In welcher Art und Weise der Leitrechner 20 auf den Empfang des Triggersignals reagiert, ist in der Transportauftragsdefinition bzw. der Statusänderungsdefinition, welche Teil der Logistikeinrichtung-Projekt-Datei 4 sein können, hinterlegt.

Das Warenlogistiksystem kann ferner eine Konfigurationseinheit 26 umfassen, wobei der Leitrechner 20 dazu eingerichtet ist, der Konfigurationseinheit 26 Zugriff auf die Transportauftragsdefinition und/oder die Statusänderungsdefinition zu gestatten. Beispielsweise ist der Leitrechner 20 dazu eingerichtet, der Konfigurationseinheit 26 Zugriff auf die Logistikeinrichtung-Projekt-Datei 4 zu gestatten. Die Konfigurationseinheit 26 ist beispielhaft als interne Einheit dargestellt, d.h. sie ist ein Teil der Warenlogistikeinrichtung 2. Es kann sich bei der Konfigurationseinheit 26 ebenso um einen externen Rechner handeln, beispielsweise den Rechner eines extern beauftragten Dienstleisters oder des Herstellers des Warenlogistiksystems.

Die Eingabeeinheit 24 ist beispielhaft als mobile Einheit dargestellt. Die Eingabeeinheit 24 ist vorzugsweise einer Ladehilfsmittelstation 18 funktionell fest zugeordnet. In der Regel ist die Eingabeeinheit 24 eine ortsfeste Einheit, welche beispielsweise räumlich unmittelbar einer der Ladehilfsmittelstationen 18 zugeordnet ist. Bei der Eingabeeinheit 24 handelt es sich beispielsweise um eine manuell zu betätigende Eingabeeinheit 24, beispielsweise einen Drucktaster. Ein Triggersignal wird an der Eingabeeinheit 24 erzeugt, indem beispielsweise der Drucktaster für eine Sekunde gedrückt wird. Es kann sich bei der Eingabeeinheit 24 ebenso um einen Leuchtdrucktaster handeln, welcher wiederum durch Betätigung für eine Sekunde ein entsprechendes Triggersignal erzeugt. Das Triggersignal wird von der Eingabeeinheit 24 an den Leitrechner 20 übertragen oder von diesem abgefragt. Ein alternatives Triggersignal ist beispielsweise das Drücken eines Leuchtdrucktasters für fünf Sekunden. Es können durch die unterschiedlich lange Betätigung eines Tasters unterschiedliche Triggersignale erzeugt werden. Auf den Empfang der entsprechenden Triggersignale reagiert der Leitrechner 20 mit unterschiedlichen Aktionen, wie sie in der Transportauftragsdefinition bzw. der Statusänderungsdefinition definiert sind. Beispielsweise kann durch eine kurze Betätigung eines Tasters an einer Ladehilfsmittelstation 18 ein Triggersignal erzeugt werden, welches den Leitrechner 20 dazu veranlasst einen Transportauftrag zu erzeugen, welcher einen Ladehilfsmitteltransport von der betreffenden Ladehilfsmittelstation 18 zu einer weiteren Ladehilfsmittelstation 18 veranlasst. Durch lange Betätigung des Drucktasters kann der zuvor erzeugte Transportauftrag wieder gelöscht werden. Es kann ebenso vorgesehen sein, dass durch kurze Betätigung eines Tasters die zugehörige Ladehilfsmittelstation 18 aktiviert wird, während durch lange Betätigung des Tasters die Ladehilfsmittelstation 18 deaktiviert wird. Auch ist denkbar, dass durch verschiedene Taster, also verschiedene Eingabeeinheiten 24 oder durch verschiedene Tasten einer Eingabeeinheit 24 verschiedene Transportaufträge zu verschiedenen Zielen oder mit unterschiedlichen Prioritäten erzeugt werden. Ebenso können verschiedene Eingabeeinheiten 24 dazu eingesetzt werden, einerseits beispielsweise einen Transportauftrag zu erzeugen und andererseits eine Statusänderung der Ladehilfsmittelstation 18 herbeizuführen. In Bezug auf die Transportaufträge kann insbesondere die Reihenfolge der abzuarbeitenden Transportaufträge durch den Leitrechner 20 angeben werden, sodass höher priorisierte Transportaufträge bevorzugt abgearbeitet werden. Eine solche Priorisierung kann auch beispielsweise durch die Betätigung eines entsprechenden Tasters als Eingabeeinheit erzeugt werden. Mit anderen Worten kann beispielsweise an einer Ladehilfsmittelstation 18 eine Eingabeeinheit 24 (beispielsweise ein Taster) vorhanden sein, welche es erlaubt, einen erzeugten Transportauftrag zu priorisieren.

Die Eingabeeinheit 24 kann ebenso als Belegungssensor 28 ausgestaltet sein. Ein solcher Belegungssensor 28 ist beispielhaft für eine der Ladehilfsmittelstationen 18 dargestellt. Der Belegungssensor 28 kann dazu eingerichtet sein, die Anwesenheit eines Ladehilfsmittels in einer Ladehilfsmittelstation 18 zu detektieren. Wird die Anwesenheit eines Ladehilfsmittels detektiert, kann ein Triggersignal erzeugt werden, welches den Zustand der Ladehilfsmittelstation 18 (gefüllt oder leer) verändert. Das Triggersignal wird von der als Belegungssensor ausgestalteten Eingabeeinheit 24 an den Leitrechner 20 übertragen, und der Leitrechner 20 erzeugt aus dieser Information einen entsprechenden Transportauftrag. Der Belegungssensor 28 kann ein kontaktloser Sensor sein, es kann sich ebenso um einen nicht kontaktlosen Sensor handeln, welcher beispielsweise durch physische Auslösung eines Kontakts aktiviert wird oder der gewichtssensitiv reagiert.

Detektiert ein Belegungssensor 28 ein Ladehilfsmittel, kann automatisch ein Transportauftrag ausgelöst werden, der den Transport des betreffenden Ladehilfsmittels von der zugehörigen oder zugeordneten Ladehilfsmittelstation 18 zu einer Ziel-Ladehilfsmittelstation definiert. Beispielsweise findet ein solcher Transport zwischen einer ersten Ladehilfsmittelstation 18A und einer zweiten Ladehilfsmittelstation 18B statt. Hierbei bedeutet automatisch, dass die Anwesenheit eines Ladehilfsmittels in der Ladehilfsmittelstation 18A mittels einer geeigneten Eingabeeinheit 24 detektiert wird, welche in Reaktion hierauf ein Triggersignal an den Leitrechner 20 übermittelt. Der Leitrechner 20 erzeugt in Reaktion auf das Triggersignal den Transportauftrag entsprechend der konfigurierten Transportauftragsdefinition. Durch Übermittlung eines entsprechenden Transportauftragssignals an ein Flurförderzeug 22 wird der Transportauftrag durch das Flurförderzeug 22 abgearbeitet. Die Übertragung eines Transportauftrags und die Übertragung eines Transportauftragssignals sollen im Kontext der folgenden Beschreibung synonym verwendet werden. Tatsächlich erfolgt selbst verständlich die Übertragung eines Transportauftrags durch Übertragung eines entsprechenden Transportauftragssignals. Die beiden Ladehilfsmittelstationen 18A, 18B sind durch einen Transportweg 10 miteinander verbunden. Der Transportweg 10 erstreckt sich innerhalb des Transportbereichs 8.

Der Leitrechner 20 ist ferner dazu eingerichtet, eine Ablaufsteuerung der Transportaufträge und/oder eine Verkehrssteuerung der fahrerlosen Flurförderzeuge 22 in dem Transportbereich 8 bereitzustellen. So kann die Durchführung oder Ausführung der Transportaufträge optimal in die Logistiksteuerung der Warenlogistikeinrichtung 2 integriert werden. Mit anderen Worten werden bei der Übertragung des Transportauftragssignals von dem Leitrechner 20 an das Flurförderzeug 22 die Parameter der Ablaufsteuerung und/oder die Parameter der Verkehrssteuerung berücksichtigt.

Die Warenlogistikeinrichtung 2 kann auf der Grundlage eines Planungsmodells unter Verwendung der Logistikeinrichtung-Projekt-Datei 4 realisiert sein. In der Logistikeinrichtung-Projekt-Datei 4 sind Daten umfasst, welche beispielsweise Eigenschaften zumindest eine der folgenden Komponenten der Warenlogistikeinrichtung 2 beschreiben: Konstruktive Eigenschaften des Bauwerks 6 der Warenlogistikeinrichtung 2, geometrische und/oder funktionelle Eigenschaften des Transportbereichs 8 und/oder der Transportwege 10, geometrische und/oder funktionelle Eigenschaften von Logistikinfrastrukturelementen 12, beispielsweise von Rolltoren 14 und insbesondere von Ladehilfsmittelstationen 18, geometrische und/oder funktionelle Eigenschaften des fahrerlosen Flurförderzeugs 22. In einem Planungsmodell, welches in der Logistikeinrichtung-Projekt-Datei 4 gespeichert ist, ist auch die veränderbare Transportauftragsdefinition hinterlegt, welche den von dem fahrerlosen Flurförderzeug 22 durchzuführenden Transportauftrag definiert.

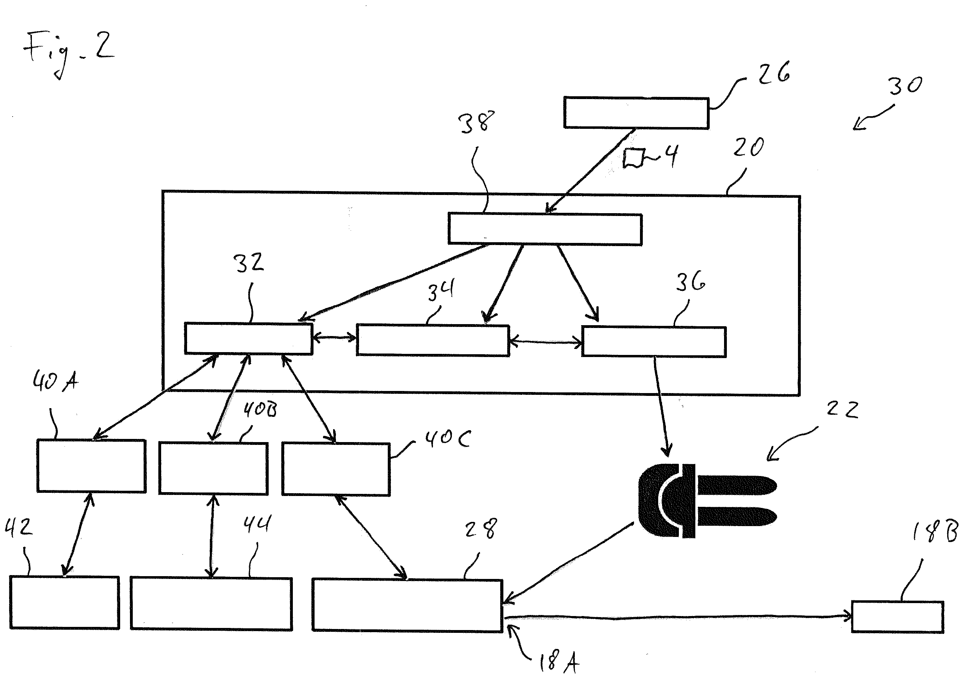

Fig. 2 zeigt eine schematische funktionelle Darstellung des Warenlogistiksystems 30. Dieses umfasst die Konfigurationseinheit 26, in der beispielsweise die Logistikeinrichtung-Projekt-Datei 4 erzeugt wird. Diese wird auf den Leitrechner 20 übertragen. Der Leitrechner 20 umfasst eine Ein-/Ausgabeeinheit 32, eine Einheit zur Ablaufsteuerung 34 und eine Verkehrssteuerung 36. Alle diese Einheiten 32, 34, 36 werden mit entsprechenden Informationen aus der Logistikeinrichtung-Projekt-Datei versorgt. Zu diesem Zweck umfasst der Leitrechner 20 eine entsprechende Distributionseinheit 38.

Mit der Ein-/Ausgabeeinheit 32 sind verschiedene Ein-/Ausgabesysteme 40A, 40B, 40C kommunikationstechnisch gekoppelt. Das erste Ein-/Ausgabesystem 40A ist mit einem oder mehreren Drucktastern 42 als Eingabeeinheit(en) gekoppelt. Das zweite Ein-/Ausgabesystem 40B ist mit einem oder mehreren Leuchtdrucktastern 44 als weitere beispielhafte Eingabeeinheit(en) gekoppelt. Jede dieser Eingabeeinheiten (24) ist funktionell einer Ladehilfsmittelstation 18 zugeordnet. Das dritte Ein-/Ausgabesystem 40C ist mit einer Ladehilfsmittelstation 18 mit Sensorüberwachung gekoppelt, konkret mit dem dort vorhandenen Belegungssensor 28. Dieser stellt beispielsweise fest, dass an der ersten Ladehilfsmittelstation 18A eine entsprechendes Ladehilfsmittel vorhanden ist. Diese Information wird entlang der beschriebenen Informationskette bis in den Leitrechner 20 kommuniziert. Entsprechend der Transportauftragsdefinition wird in dem Leitrechner 20 ein Transportauftrag erzeugt. Dieser wird über die Verkehrssteuerung 36 an das Flurförderzeug 22 kommuniziert. Das Flurförderzeug 22 begibt sich daraufhin zur ersten Ladehilfsmittelstation 18A, und führt gemäß dem empfangenen Transportauftrag beispielsweise einen Transport zu der zweiten Ladehilfsmittelstation 18B durch.

Die Ablaufsteuerung, welche der Erstellung eines Transportauftrags zugrunde liegt, kann beispielsweise am Leitrechner 20 oder an der Konfigurationseinheit 26 festgelegt werden. Eine Definition, die anschließend als Transportauftragsdefinition in dem Leitrechner 20 abgelegt wird, kann beispielsweise wie folgt vorgenommen werden:
Es erfolgt in einem ersten Schritt eine Auswahl der Peripherieeinheit, also der Eingabeeinheit 24, die bevorzugt einer Ladehilfsmittelstation 18 zugeordnet ist. Beispielsweise wird ein Taster, ein Leuchtdrucktaster oder ein Belegungssensor ausgewählt.

In einem zweiten Schritt wird ein Triggersignal, welches der Leitrechner 20 von der Eingabeeinheit 24 erhält, ausgewählt. Die zu einer Eingabeeinheit 24 im System vorhandenen Triggersignale sind vom Typ der eingesetzten und in der Warenlogistikeinrichtung verbauten Eingabeeinheit 24 abhängig und mit der Installation im System hinterlegt. Somit wird ein mögliches Triggersignal einer Eingabeeinheit 24 ausgewählt, zu dem das Systemverhalten konfiguriert werden soll. Die Eingabeeinheit 24 kann dazu eingerichtet sein, verschiedene Triggersignale abzugeben. Diese verschiedenen Triggersignale werden beispielsweise durch unterschiedlich lange Betätigung eines Drucktasters erzeugt. Beispielsweise kann bei kurzem Druck auf einen Drucktaster als Eingabeeinheit 24 ein Transportauftrag erzeugt werden, welcher die der Eingabeeinheit 24 zugeordnete Ladehilfsmittelstation 18 als Start-Ladehilfsmittelstation umfasst. Ein Triggersignal, welches durch eine lange Betätigung beispielsweise eines Drucktasters erzeugt wird, beispielsweise die Betätigung des Drucktasters für ca. 3 Sekunden, kann dazu führen, dass der Leitrechner 20 den zuvor erzeugten Transportauftrag wieder löscht.

In einem dritten Schritt wird eine Statusänderungsanforderung eines Transportauftrags, beispielsweise einen Transportauftrag zu erzeugen, zu ändern oder zu löschen, für das entsprechende Triggersignal der Eingabeeinheit 24 an dem Leitrechner 20 oder der Konfigurationseinheit 26 ausgewählt.

In einem vierten Schritt werden bevorzugt für die Statusänderungsanforderung des Triggersignals der Eingabeeinheit 24 eine Start- und/oder eine Ziel-Ladehilfsmittelstation an dem Leitrechner 20 oder der Konfigurationseinheit 26 ausgewählt. Hierbei ist insbesondere vorgesehen, dass eine oder mehrere Start- und/oder Ziel-Ladehilfsmittelstationen auswählbar sind. Insbesondere kann hierbei je nachdem ob es sich um das Erzeugen oder Ändern eines Transportauftrags (Abtransport) eines Ladehilfsmittels von einer Start-Ladehilfsmittelstation oder um das Erzeugen oder Ändern eines Transportauftrags (Lieferung) zu einer Ziel-Ladehilfsmittelstation handelt, im ersten Fall vorgesehen sein, dass nur eine Start-Ladehilfsmittelstation aber mehrere Ziel-Ladehilfsmittelstationen auswählbar sind und im zweiten Fall vorgesehen sein, dass nur eine Ziel-Ladehilfsmittelstation aber mehrere mögliche Start-Ladehilfsmittelstationen auswählbar sind.

Abhängig von der Definition des Transportauftrags können weitere Kausalitäten bei der Ablaufsteuerung berücksichtigt werden. Beispielsweise kann für die Ziel-Ladehilfsmittelstation eine Sensorabfrage der ausgewählten Ladehilfsmittelstation vorgesehen sein, welche feststellt, ob die fragliche Ziel-Ladehilfsmittelstation frei oder belegt ist. In einem solchen Fall würde der Transportauftrag nur erzeugt, wenn die Ziel-Ladehilfsmittelstation auch tatsächlich frei, und somit für den Transportauftrag verfügbar ist. Alternativ kann die Auswahl der Ziel-Ladehilfsmittelstation derart definiert werden, dass deren Auswahl durch eine Benutzereingabe am Fahrzeugdisplay erfolgt. Es kann ebenso bei der Definition der Ablaufsteuerung vorgesehen sein, dass der Leitrechner 20 überprüft, ob die Kapazität der Ziel-Ladehilfsmittelstation für den betreffenden Transportauftrag ausreichend ist. Eine solche Information kann in dem Leitrechner 20 zum Zweck der Ablaufsteuerung vorhanden sein. Ebenso kann vorgesehen sein, dass nicht eine einzelne Ladehilfsmittelstation als Ziel-Ladehilfsmittelstation festgelegt wird, sondern eine Gruppe von Ladehilfsmittelstationen. Die Auswahl, welche spezifische Ladehilfsmittelstation als konkrete Ziel-Ladehilfsmittelstation ausgewählt wird, kann beispielsweise ebenso anhand der Belegung der Ladehilfsmittelstationen vom System getroffen werden. In einem solchen Fall wählt das System diejenige Ziel-Ladehilfsmittelstation aus, welche für den betreffenden Transportauftrag noch eine ausreichende Aufnahmekapazität aufweist. Sind mehrere Ziel-Ladehilfsmittelstationen verfügbar, kann eine Auswahl nach weiteren Kriterien erfolgen, beispielsweise einer Priorisierung der verschiedenen Ziel-Ladehilfsmittelstationen oder der Nähe zur Start-Ladehilfsmittelstation.

In gleicher oder ähnlicher Weise, wie dies obenstehend für die Ziel-Ladehilfsmittelstation ausgeführt wurde, kann der Transportauftrag auch im Hinblick auf die Start-Ladehilfsmittelstation flexibel definiert werden. Beispielsweise kann als Start-Ladehilfsmittelstation diejenige ausgewählt werden, für die ein zugeordneter Belegungssensor als Eingabeeinheit 24, anzeigt, dass in der betreffenden Start-Ladehilfsmittelstation auch tatsächlich ein Ladehilfsmittel vorhanden ist.

Nur wenn diese Informationen von einem entsprechenden Belegungssensor positiv bestätigt wird, wird ein entsprechender Transportauftrag erzeugt. In ähnlicher Weise kann der Leitrechner 20 auch die Start-Ladehilfsmittelstation für den Transportauftrag auswählen, sofern als Start-Ladehilfsmittelstation nicht eine spezifische Ladehilfsmittelstation, sondern eine Gruppe von Ladehilfsmittelstationen definiert ist. Beispielsweise kann der Leitrechner 20 unter Berücksichtigung der Ablaufsteuerung als Start-Ladehilfsmittelstationen diejenige auswählen, welche die höchste Belegung aufweist, so dass eine möglicherweise in naher Zukunft auftretende Überbelegung der betreffenden Ladehilfsmittelstation bereits im Vorwege vermieden werden kann.

Das Warenlogistiksystem unterstützt durch die oben beschriebene kausal verknüpfte Auswahl den Benutzer bei der Konfiguration der Ablaufsteuerung zur Erzeugung von Transportaufträgen. Es ist in dem System insbesondere vorgesehen, dass nur diejenigen Kombinationen von Peripherieeinheiten, also Eingabeeinheiten 24 und Ladehilfsmittelstationen 18, sowie Triggersignalen zu Transportaufträgen zusammengefasst werden können, die auch im System tatsächlich vorhanden sind und logisch von diesem verarbeitet werden können.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Warenlogistikeinrichtung
- 4: Logistikeinrichtung-Projekt-Datei
- 6: Bauwerk
- 8: Transportbereich
- 10: Transportweg
- 12: Logistikinfrastrukturelement
- 14: Rolltor
- 16: Ladestation
- 18: Ladehilfsmittelstation
- 18A: erste Ladehilfsmittelstation
- 18B: zweite Ladehilfsmittelstation
- 20: Leitrechner
- 22: Flurförderzeug
- 24: Eingabeeinheit
- 26: Konfigurationseinheit
- 28: Belegungssensor
- 30: Warenlogistiksystem
- 32: Ein-/Ausgabeeinheit
- 34: Ablaufsteuerung
- 36: Verkehrssteuerung
- 38: Distributionseinheit
- 40A, 40B, 40: Cerstes bis drittes Ein-/Ausgabesystem
- 42: Drucktaster
- 44: Leuchtdrucktaster

## Patentansprüche

1. Warenlogistiksystem (30), umfassend einen Leitrechner (20), zumindest ein zum Betrieb in einem Transportbereich (8) eingerichtetes fahrerloses Flurförderzeug (22) und zumindest eine Eingabeeinheit (24), wobei die Eingabeeinheit (24) dazu eingerichtet ist, ein Triggersignal zu erzeugen und an den Leitrechner (20) zu übertragen, wobei der Leitrechner (20) dazu eingerichtet ist,
a) aus dem Triggersignal unter Anwendung einer hinterlegten Transportauftragsdefinition einen in dem Transportbereich (8) von dem fahrerlosen Flurförderzeug (22) durchzuführenden Transportauftrag zu erzeugen, zu ändern oder zu löschen und ein mit diesem Transportauftrag verknüpftes Transportauftragssignal an das Flurförderzeug (22) zu übertragen, wobei das Transportauftragssignal das Flurförderzeug (22) dazu veranlasst, den Transportauftrag auszuführen, und/oder
b) aus dem Triggersignal unter Anwendung einer hinterlegten Statusänderungsdefinition einen Status zumindest einer der Eingabeeinheit (24) zugeordneten Ladehilfsmittelstation (18) zu ändern, insbesondere die Ladehilfsmittelstation (18) zu aktivieren oder zu deaktivieren, wobei
die in dem Leitrechner (20) hinterlegte Transportauftragsdefinition und/oder die in dem Leitrechner (20) hinterlegte Statusänderungsdefinition veränderbar sind/ist.

2. Warenlogistiksystem (30) nach Anspruch 1, ferner umfassend eine Konfigurationseinheit (26), wobei der Leitrechner (20) dazu eingerichtet ist, der Konfigurationseinheit (26) Zugriff auf die Transportauftragsdefinition und/oder die Statusänderungsdefinition zu gestatten.

3. Warenlogistiksystem (30) nach Anspruch 1 oder 2, bei dem die Eingabeeinheit (24) ein manuell zu betätigender Taster oder ein Belegungssensor (28) ist, welcher dazu eingerichtet ist, in Reaktion auf eine manuelle Betätigung oder eine Detektion der Anwesenheit eines Ladehilfsmittels das Triggersignal zu erzeugen.

4. Warenlogistiksystem (30) nach einem der vorhergehenden Ansprüche, bei dem zumindest eine erste Ladehilfsmittelstation (18A) und eine zweite Ladehilfsmittelstation (18B), die durch einen Transportweg (10) miteinander verbunden sind, in dem Transportbereich (8) vorhanden sind, wobei der Transportauftrag darin besteht, zumindest ein Ladehilfsmittel von der ersten Ladehilfsmittelstation (18A) zu der zweiten Ladehilfsmittelstation (18B) zu befördern.

5. Warenlogistiksystem (30) nach einem der vorhergehenden Ansprüche, bei dem der Leitrechner (20) dazu eingerichtet ist, eine Ablaufsteuerung (34) der Transportaufträge und/oder eine Verkehrssteuerung (36) der fahrerlosen Flurförderzeuge (22) in dem Transportbereich (8) bereitzustellen und den Transportauftrag unter Berücksichtigung der Parameter der Ablaufsteuerung (34) und/oder der Verkehrssteuerung (36) zu erzeugen.

6. Warenlogistiksystem (30) nach einem der vorhergehenden Ansprüche, welches in einer Warenlogistikeinrichtung implementiert ist, wobei die Warenlogistikeinrichtung, auf der Grundlage eines Planungsmodells und unter Verwendung von in einer Logistikeinrichtung-Projekt-Datei gespeicherten Daten realisiert ist, und wobei die Logistikeinrichtung-Projekt-Datei Daten umfasst, die Eigenschaften zumindest einer der folgenden Komponenten der Warenlogistikeinrichtung beschreiben:
- konstruktive Eigenschaften eines Bauwerks (6) der Warenlogistikeinrichtung,
- geometrische und/oder funktionelle Eigenschaften des Transportbereichs (8) und/oder des Transportwegs (10),
- geometrische und/oder funktionelle Eigenschaften von Logistik-Infrastrukturelementen, insbesondere der ersten und zweiten Ladehilfsmittelstation (18A, 18B),
- geometrische und/oder funktionelle Eigenschaften des fahrerlosen Flurförderzeugs (22),
wobei in der Logistikeinrichtung-Projekt-Datei ferner Parameter der Transportauftragsdefinition hinterlegt sind.

7. Warenlogistiksystem (30) nach einem der vorhergehenden Ansprüche, wobei die veränderbare Transportauftragsdefinition in einem kausal verknüpfen Parameterraum definierbar und an dem Leitrechner (20) oder der Konfigurationseinheit (26) veränderbar ist, und der Parameterraum als Parameter umfasst:
a) in dem Warenlogistiksystem (30) vorhandene Eingabeeinheiten (24), insbesondere alle vorhandenen Eingabeeinheiten (24),
b) für jede umfasste Eingabeeinheit (24), einen oder mehrere mögliche Typen der von dieser erzeugbaren Triggersignale, und
c) für jedes Triggersignal jeder Eingabeeinheit (24), eine oder mehrere Statusänderungsänderungsanforderung(en) eines Transportauftrags, insbesondere diesen zu erzeugen, zu ändern oder zu löschen.

8. Warenlogistiksystem (30) nach Anspruch 7, wobei der Parameterraum als Parameter ferner umfasst:
für jeden Transportauftrag, sofern die Statusänderungsanforderung angibt, diesen zu erzeugen oder zu ändern,
d) eine Start-Ladehilfsmittelstation oder eine Gruppe von Start-Ladehilfsmittelstationen, und
e) eine Ziel-Ladehilfsmittelstation oder eine Gruppe von Ziel-Ladehilfsm ittelstationen.

9. Warenlogistiksystem (30) nach Anspruch 8, wobei die Parameter d) und/oder e) zusätzlich kausal verknüpft sind/ist mit:
i) einem Sensorsignal eines Belegungssensors der Start-Ladehilfsmittelstation oder Sensorsignalen von Belegungssensoren der Gruppe von Start-Ladehilfsmittelstationen, welches/welche angibt/angeben, ob die Ladehilfsmittelstation(en) frei oder belegt ist/sind, und/oder
ii) einem Parameter einer Ablaufsteuerung (34) der Transportaufträge und/oder einer Verkehrssteuerung (36) der fahrerlosen Flurförderzeuge (22) in dem Transportbereich (8), welcher angibt, ob die Ladehilfsmittelstation frei oder belegt ist,
wobei der Transportauftrag nur erzeugt wird, wenn die Start-Ladehilfsmittelstation belegt und die Ziel-Ladehilfsmittelstation frei ist.

10. Verfahren zum Betreiben eines Warenlogistiksystems (30), welches umfasst: einen Leitrechner (20), zumindest ein zum Betrieb in einem Transportbereich (8) eingerichtetes fahrerloses Flurförderzeug (22) und zumindest eine Eingabeeinheit (24), die folgenden Schritte umfassend:
Erzeugen eines Triggersignals an der Eingabeeinheit (24) und übertragen des Triggersignals an den Leitrechner (20),
wobei der Leitrechner (20),
a) aus dem Triggersignal unter Anwendung einer hinterlegten Transportauftragsdefinition einen in dem Transportbereich (8) von dem fahrerlosen Flurförderzeug (22) durchzuführenden Transportauftrag erzeugt, ändert oder löscht und ein mit diesem Transportauftrag verknüpftes Transportauftragssignal an das Flurförderzeug (22) überträgt, wobei das Flurförderzeug (22) den Transportauftrag in Reaktion auf das Transportauftragssignal ausführt, und/oder
b) aus dem Triggersignal unter Anwendung einer hinterlegten Statusänderungsdefinition einen Status zumindest einer der Eingabeeinheit (24) zugeordnete Ladehilfsmittelstation (18) ändert, insbesondere die Ladehilfsmittelstation (18) zu aktiviert oder deaktiviert, wobei
die in dem Leitrechner (20) hinterlegte Transportauftragsdefinition und/oder die in dem Leitrechner (20) hinterlegte Statusänderungsdefinition veränderbar sind/ist.

11. Verfahren nach Anspruch 10, wobei das Warenlogistiksystem (30) ferner eine Konfigurationseinheit (26) umfasst, wobei der Leitrechner (20) der Konfigurationseinheit (26) Zugriff auf die Transportauftragsdefinition und/oder die Statusänderungsdefinition gestattet und die Konfigurationseinheit (26) die Transportauftragsdefinition und/oder die Statusänderungsdefinition ändert.

12. Verfahren nach Anspruch 10 oder 11, bei dem zumindest eine erste Ladehilfsmittelstation (18A) und eine zweite Ladehilfsmittelstation (18B), die durch einen Transportweg (10) miteinander verbunden sind, in dem Transportbereich (8) vorhanden sind, wobei bei Ausführung des Transportauftrags, zumindest ein Ladehilfsmittel von der ersten Ladehilfsmittelstation (18A) zu der zweiten Ladehilfsmittelstation (18B) befördert wird.

13. Verfahren nach einem der Ansprüche 10 bis 12, bei dem der Leitrechner (20) eine Ablaufsteuerung (34) der Transportaufträge und/oder eine Verkehrssteuerung (36) der fahrerlosen Flurförderzeuge (22) in dem Transportbereich (8) bereitstellt und den Transportauftrag unter Berücksichtigung der Parameter der Ablaufsteuerung (34) und/oder der Verkehrssteuerung (36) erzeugt.

14. Verfahren nach einem der Ansprüche 10 bis 13, wobei das Warenlogistiksystem (30) in einer Warenlogistikeinrichtung implementiert wird, wobei die Warenlogistikeinrichtung, auf der Grundlage eines Planungsmodells und unter Verwendung von in einer Logistikeinrichtung-Projekt-Datei gespeicherten Daten realisiert wird, und wobei die Logistikeinrichtung-Projekt-Datei Daten umfasst, die Eigenschaften zumindest einer der folgenden Komponenten der Warenlogistikeinrichtung beschreiben:
- konstruktive Eigenschaften eines Bauwerks (6) der Warenlogistikeinrichtung,
- geometrische und/oder funktionelle Eigenschaften des Transportbereichs (8) und/oder des Transportwegs (10),
- geometrische und/oder funktionelle Eigenschaften von Logistik-Infrastrukturelementen, insbesondere der ersten und zweiten Ladehilfsmittelstation (18A, 18B),
- geometrische und/oder funktionelle Eigenschaften des fahrerlosen Flurförderzeugs (22),
wobei in der Logistikeinrichtung-Projekt-Datei ferner Parameter der Transportauftragsdefinition hinterlegt sind.

15. Verfahren nach einem der Ansprüche 10 bis 14, wobei die veränderbare Transportauftragsdefinition in einem kausal verknüpfen Parameterraum definiert und an dem Leitrechner (20) oder der Konfigurationseinheit (26) veränderbar ist, und der Parameterraum als Parameter umfasst:
a) in dem Warenlogistiksystem (30) vorhandene Eingabeeinheiten (24), insbesondere alle vorhandenen Eingabeeinheiten (24),
b) für jede umfasste Eingabeeinheit (24), einen oder mehrere mögliche Typen der von dieser erzeugbaren Triggersignale, und
c) für jedes Triggersignal jeder Eingabeeinheit (24), eine oder mehrere Statusänderungsänderungsanforderung(en) eines Transportauftrags, insbesondere diesen zu erzeugen, zu ändern oder zu löschen,
für jeden Transportauftrag, sofern die Statusänderungsanforderung angibt, diesen zu erzeugen oder zu ändern:
d) eine Start-Ladehilfsmittelstation oder eine Gruppe von Start-Ladehilfsmittelstationen, und
e) eine Ziel-Ladehilfsmittelstation oder eine Gruppe von Ziel-Ladehilfsm ittelstationen,
wobei insbesondere die Parameter d) und/oder e) zusätzlich kausal verknüpft sind/ist mit:
i) einem Sensorsignal eines Belegungssensors der Start-Ladehilfsmittelstation oder Sensorsignalen von Belegungssensoren der Gruppe von Start-Ladehilfsmittelstationen, welches/welche angibt/angeben, ob die Ladehilfsmittelstation(en) frei oder belegt ist/sind, und/oder
ii) einem Parameter einer Ablaufsteuerung (34) der Transportaufträge und/oder einer Verkehrssteuerung (36) der fahrerlosen Flurförderzeuge (22) in dem Transportbereich (8), welcher angibt, ob die Ladehilfsmittelstation frei oder belegt ist,
wobei der Transportauftrag nur erzeugt wird, wenn die Start-Ladehilfsmittelstation belegt und die Ziel-Ladehilfsmittelstation frei ist.
